# EUROPEAN PATENT APPLICATION

(11) **EP 1 152 174 A2**
(43) Date of publication of application: **07.11.2001**
(21) Application number: 01110714.1
(22) Date of filing: 03.05.2001
(51) Int. Cl.: F16H 63/38

(54) **Combined detent and neutral sensor**

(30) Priority: 05.05.2000 GB 0010778
(71) Applicant: EATON CORPORATION, Cleveland, Ohio 44114-2584 (US)
(72) Inventor: Brockelbank, David, Morecambe, Lancaster LA4 5TP (GB); Jackson, Graeme Andrew, Leigh, Lancaster WN7 3NF (GB)
(74) Representative: Patentanwälte Rüger, Barthelt & Abel

(57) **Abstract**

A combination (10) utilizing a single detent plunger (22) provides in-gear and in-neutral detent functions and an in-neutral signal (N) function. A shift member (12,60) is provided with in-gear detent grooves (32,34) and an in-neutral detent groove (30) having different depths (36 ≠ 38).

## Description

### BACKGROUND OF THE INVENTION

### FIELD OF THE INVENTION

The present invention relates to in-gear and in-neutral detent mechanisms and in-neutral sensors. In particular, the present invention relates to an assembly utilizing a single detent plunger to provide the functions of an in-gear detent, an in-neutral detent and an in-neutral sensor.

### DESCRIPTION OF THE PRIOR ART

Transmissions utilizing shift members, such as parallel shift rods or a single shift shaft, which are axially movable to in-gear and in-neutral positions, are well known in the prior art, as may be seen by reference to U.S. Pats. No. 5,737,969; 5,743,143; 4,974,468; 5,281,902; 4,920,815 and 5,481,170, the disclosures of which are incorporated herein by reference. It is also well known to use a rotatable cross-shaft having in-gear and in-neutral rotational positions to shift a transmission (see U.S. Pat. No. 5,471,893, the disclosure of which is incorporated herein by reference).

The prior art devices typically utilized separate detent and neutral sensing devices, thereby increasing space requirements, part requirements, expense and assembly time.

### SUMMARY OF THE INVENTION

In accordance with the present invention, the drawbacks of the prior art are minimized by providing an assembly requiring a single detent plunger to provide all of the in-gear detent, in-neutral detent and in-neutral sensing functions.

The foregoing is accomplished by providing an axially or rotationally movable shaft having an in-neutral and at least one in-gear position with detent grooves or notches which will align with the detent plunger axis in the various positions of the shaft and having differing depths so that the axial position of the detent plunger with the shift member in the in-neutral position will differ from the axial position of the plunger with the shift member in a transient or in the in-neutral position. A position sensor is provided to sense at least one axial position of the plunger and to provide a signal indicative thereof. Preferably, the plunger, the sensor and the plunger biasing means are all contained in a plug-type assembly which is easily assembled to and removed from the housing as a one-piece subassembly.

Accordingly, it is an object of the present invention to provide an improved assembly utilizing a single detent plunger for providing an in-gear detent function, an in-neutral detent function and an in-neutral signaling function for a transmission shift member.

This and other objects and advantages of the present invention will become apparent from a reading of the following description of the preferred embodiment taken in connection with the attached drawings.

### BRIEF DESCRIPTION OF THE DRAWINGS

Fig. 1 is an enlarged schematic illustration of one embodiment of the present invention.
Fig. 2 is an enlarged sectional view of a shift member having separate in-gear and in-neutral rotational positions and suitable for use in the present invention.

### DESCRIPTION OF THE PREFERRED EMBODIMENT

Change-gear transmissions utilizing shift members selectively axially or rotationally positioned into in-gear or in-neutral positions for shifting purposes are well known in the prior art. See aforementioned U.S. Pats. No.5,737,969; 5,743,143; 5,481,170; 5,471,893; 4,974,468 and 4,920,815.

The prior art includes the use of in-gear and in-neutral detents, usually resiliently biased plungers or balls acting with grooves or slots in the shift member, to provide a positive feel of having achieved a desired position and to retain the shift member in position against the effects of shift lever whip or the like (see, for example, U.S. Pat. No. 5,758,543).

It is also well known to use sensors to sense when the transmission shifting devices are in a neutral position and to provide a signal indicative thereof. It is important to have an accurate in-neutral signal for enabling the vehicle motor starter circuit and/or for various shift logics.

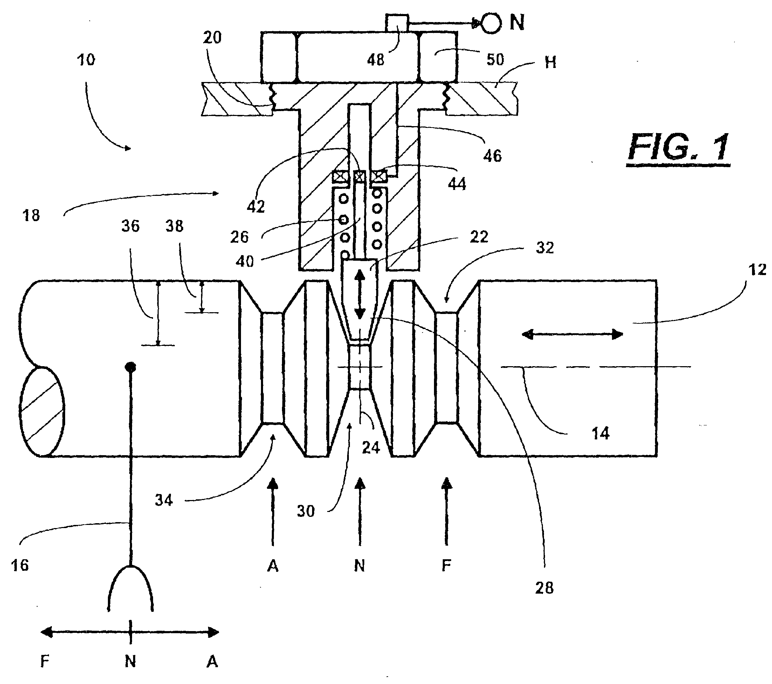

Fig. 1 is an exaggerated schematic view of the assembly or combination 10 of the present invention as utilized with a shift shaft 12 axially movable in a transmission housing H along a first axis 14 to a centered neutral position N and forward and aft to engaged positions F and A, respectively. Typically, one or more shift forks 16 will be movable with shaft 12 for selectively engaging and disengaging gears.

A headed plug assembly 18 is removably mounted in the housing, such as by threads 20, and carries a detent plunger 22 axially movable along a second axis 24, which is generally perpendicular to and intersect the first axis 14. The plunger 24 is biased outwardly toward the first axis by spring 26 and includes a tapered tip 28.

The shift member or shaft 12 includes a centered in-neutral groove 30, which will align with the plunger and second axis 24 when the shaft is in the neutral axial position. The shaft also has two in-gear grooves 32 and 34 located to each side of the in-neutral groove 30, which will align with the second axis 24 when the shaft is in the forward or aft in-gear axial positions thereof. Accordingly, the plunger will engage into the grooves, which are also tapered to provide the required resilient detent function.

As may be seen, in-neutral groove 30 has a depth 36, which is different from, deeper in this example, the depth 38 of the in-gear grooves 32 and 34. By using different depth grooves, the plunger 22 will assume differing axial positions along axis 24 when biased into the in-neutral and in-gear grooves.

In the example of Fig. 1, the plug assembly 18 includes a shaft 40 movable with plunger 22 which carries a material 42, such as, for example, magnetic or metallic material or the like, which can be sensed by proximity sensors 44 when the plunger 22 is in the axial position corresponding to shaft 12 being in the neutral position thereof. In the illustrated embodiment, a lead wire 46 extends from sensor 44 to a connector 48 located on the head 50 of the plug assembly 12. Sensor 44 will provide an in-neutral signal N when plunger 22 is fully received in in-neutral groove 30.

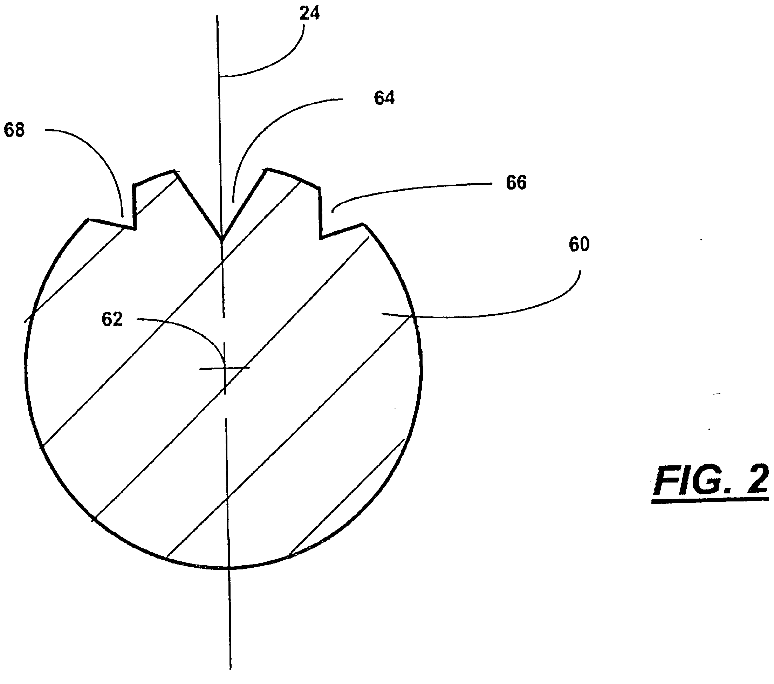

Fig. 2 illustrates a shaft 60, such as a cross-shaft or the like (see U.S. Pat. No. 5,471,893), having in-gear and in-neutral rotational positions. Shaft 60 may cooperate with a plug assembly 12 of the type discussed above in connection with Fig. 1 and is rotatable about an axis 62, which is intersected by second axis 24.

Shaft 60 is provided with a centered, deeper axially extending in-neutral groove 64 and shallower in-gear grooves 66 and 68 circumferentially displaced on each side thereof.

Accordingly, it may be seen that a new and improved assembly for providing in-gear and in-neutral detent functions and in-neutral sensing is provided.

Although the present invention has been described with a certain degree of particularity, it is understood that the description of the preferred embodiment is by way of example only and that numerous changes to form and detail are possible without departing from the spirit and scope of the invention as hereinafter claimed.

## Claims

1. A combination for providing an in-gear detent function, an in-neutral detent function and an in-neutral signal for a transmission having a shift member (12) axially movable along a first axis (14) to at least one in-gear position (F,A) and to an in-neutral position (N), said combination comprising:
a single detent member (22) axially movable along a second axis (24) generally perpendicular to and intersecting said first axis, said detent member resiliently biased toward said first axis;
at least one in-gear detent groove (32,34) having tapered sides and a first depth (38) provided in said shift member, said in-gear detent groove aligning with said second axis when said shaft is in an in-gear position for receiving said detent member;
an in-neutral detent groove (30) having tapered sides and a second depth (36), provided in said shift member, said in-neutral groove aligning with said second axis when said shaft is in said neutral position for receiving said detent member, said first depth different from said second depth (36 ≠ 38) whereby said detent member will have a different axial position along said second axis when said shift member is in an in-gear position than when said shift member is in said in-neutral position; and
a sensor (42,44) for sensing when said detent member is in an axial position along said second axis corresponding to said shift member being in the in-neutral position and providing a signal indicative thereof.

2. The combination of claim 1 wherein said detent member is a plunger (22) having a tapered tip (28).

3. The combination of claim 1 wherein said second depth is greaterthan said first depth (36 > 38).

4. The combination of claim 2 wherein said second depth is greater than said first depth (36 > 38).

5. The combination of claim 1 wherein said detent member (22) and said sensor are retained in a plug assembly (18) removably mounted to a transmission housing.

6. The combination of claim 5 wherein said sensor (42,44) includes a lead wire (46) leading to a connector (48) accessible to an exterior portion (50) of said plug assembly.

7. The combination of claim 1 wherein said sensor is a proximity sensor.

8. A combination for providing an in-gear detent function, an in-neutral detent function and an in-neutral signal for a transmission having a shift member (60) rotationally movable about a first axis (62) to at least one in-gear position and to an in-neutral position, said combination comprising:
a single detent member (22) axially movable along a second axis (24) generally perpendicular to and intersecting said first axis, said detent member resiliently biased toward said first axis;
at least one in-gear detent groove (66,68) having tapered sides and a first depth provided in said shift member, said in-gear detent groove aligning with said second axis when said shaft is in an in-gear position for receiving said detent member;
an in-neutral detent groove (64) having tapered sides and a second depth, provided in said shift member, said in-neutral groove aligning with said second axis when said shaft is in said neutral position for receiving said detent member, said first depth different from said second depth whereby said detent member will have a different axial position along said second axis when said shift member is in an in-gear position than when said shift member is in said in-neutral position; and
a sensor for sensing when said detent member is in an axial position along said second axis corresponding to said shift member being in the in-neutral position and providing a signal (N) indicative thereof.

9. The combination of claim 8 wherein said detent member is a plunger having a tapered tip.

10. The combination of claim 8 wherein said second depth is greater than said first depth.

11. The combination of claim 8 wherein said detent member (22) and said sensor are retained in a plug assembly (18) removably mounted to a transmission housing.
